# EUROPÄISCHE PATENTSCHRIFT

(11) **EP 1 527 932 B1**
(45) Veröffentlichungstag und Bekanntmachung des Hinweises auf die Patenterteilung: **13.08.2008**
(21) Anmeldenummer: 04025121.7
(22) Anmeldetag: 22.10.2004
(51) Int. Cl.: B60K 15/05

(54) **Verschlusseinrichtung für Tankstutzen in Kraftfahrzeugen**
Closing device for tank inlet in motor vehicles
Dispositif d'obturation pour embout de remplissage d'essence d 'automobiles

(30) Priorität: 29.10.2003 DE 10350471
(43) Veröffentlichungstag der Anmeldung: 04.05.2005
(73) Patentinhaber: Visiocorp Patents S.à.r.l., 1653 Luxembourg (LU)
(72) Erfinder: Busch, Marcus, 31275 Lehrte (DE); Bultmann, Etzhard, 30900 Wedemark (DE)
(74) Vertreter: Rausch, Gabriele

(56) Entgegenhaltungen:
- DE-A1- 19 543 034
- DE-A1- 19 747 986
- DE-A1- 19 923 046

## Beschreibung

Die Erfindung betrifft eine Verschlusseinrichtung für Tankstutzen in Kraftfahrzeugen.

Aus dem Stand der Technik sind Verschlusseinrichtungen für Tankstutzen in Kraftfahrzeugen bekannt, die als Schraubdeckel ausgeführt sind, wobei die Schraubdeckel abschließbar ausgebildet sein können. Üblicherweise sind der Tankstutzen und der Schraubdeckel hinter einer Tankklappe verborgen, die die Kontur der Karosserie fortführt und in aller Regel in der Wagenfarbe lackiert ist.

Das Öffnen der Tankstutzen ist mitunter unkomfortabel, insbesondere bei Kraftfahrzeugen mit Dieselmotor, da sich Kraftstoffreste an dem Schraubdeckel zusammen mit Staub anlagern, was zu Verschmutzungen seitens der Fahrzeugnutzer führt.

Die DE 199 23 046 A1 (beinhaltet die Merkmale des Oberbegriffs des Anspruchs 1) beschreibt eine gattungsgemäße Behälterverschlusseinrichtung, mit zwei in sich starren Schließelementen, die im Wesentlichen symmetrisch zu einer Mittellinie der Eingangsöffnung ausgebildet und angeordnet sind. Die Schließelemente sind quer zur Einführungsrichtung einer Fluidleitung verschiebbar.

Die DE 195 43 034 A1 beschreibt einen Tankverschluss mit schwenkbar angeordneten Verschlussklappen, die entgegen einer Feder verschwenkbar gelagert sind. Die Verschlussklappen sind schräg zueinander angeordnet, die Schwenkachse liegt senkrecht zur Einführrichtung des Einführstutzens.

Aufgabe der Erfindung ist es, eine Verschlusseinrichtung für Tankstutzen in Kraftfahrzeugen bereitzustellen, die einen einfachen und komfortablen Tankvorgang ermöglichen.

Diese Aufgabe wird durch eine Verschlusseinrichtung für Tankstutzen in Kraftfahrzeugen gelöst, bei der an dem Tankstutzen zumindest zwei Verschlusselemente schwenkbar gelagert sind, wobei die Verschlusselemente an ihrer Oberseite Einführschrägen aufweisen, die dergestalt ausgebildet sind, dass bei einem Aufsetzen einer Zapfpistole die Verschlusselemente verschwenken und den Tankstutzen freigeben. Auf diese Art und Weise wird erreicht, dass ein sicher verschlossener Tankstutzen ohne direkten Kontakt mit den Händen geöffnet werden kann. Durch das Aufsetzen der Zapfpistole und der Ausübung eines gewissen Drucks in Richtung des Tankstutzens werden die Verschlusselemente auseinander gedrückt und geben den Zugang zum Tankstutzen für die Zapfpistole frei. Die Erfindung sieht vor, dass die Schwenkachse der Verschlusselemente im Wesentlichen parallel zu der Längserstreckung des Tankstutzens ausgerichtet ist, so dass bei einer zweiteiligen Ausgestaltung der Verschlusselemente eine zangenförmige Öffnungsbewegung realisiert wird. Die Verschlusselemente können dann an einer gemeinsamen Achse gelagert werden.

Die Einführschrägen sind vorteilhafter Weise konisch, dach- oder pyramidenförmig oder als Hyperboloid ausgebildet, um ein gleichmäßiges und einfaches Öffnen der Verschlusselemente zu ermöglichen. Wesentlich ist dabei, dass die Einführschrägen sich in Richtung auf den Tankstutzen verjüngen, so dass bei einer Aufsetzbewegung der Zapfpistole die Verschlusselemente auseinander gedrückt werden.

Um nach dem Betanken ein sicheres Verschließen des Tankstutzens zu gewährleisten und diesen während des Fahrbetriebes verschlossen zu halten, sind die Verschlusselemente entgegen der Öffnungsbewegung federbelastet. Die Feder ist beispielsweise als Drehfeder ausgebildet.

Vorteilhafterweise weisen die Verschlusselemente Lippen bzw. Lippen und Ausnehmungen auf, die einander im geschlossenen Zustand überdecken und so die Verschlusswirkung verstärken.

Ebenfalls ist es vorgesehen, dass an den Verschlusselementen und dem Tankstutzen korrespondierend ausgebildete Vorsprünge und Ausnehmungen vorhanden sind, die einander im geschlossenen Zustand überdecken, so dass ein möglichst gasdichter Verschluss des Tankstutzens verwirklicht wird. Um die Gasdichtheit und den Verschluss zu verbessern, sind Dichtungen an den Kontaktbereichen der Verschlusselemente untereinander und/oder an den Kontaktbereichen der Verschlusselemente zu dem Tankstutzen angeordnet, vorzugsweise sind die Dichtungen als Gummidichtungen ausgebildet.

Um ein schnelles Aufklappen oder Zuschnappen der Verschlusselemente zu verhindern, sind Bremseinrichtungen den Verschlusselementen zugeordnet, die eine verzögerte Öffnung des Tankstutzens bewirken. Die Bremseinrichtungen sind vorzugsweise als Silikonbremsen ausgeführt, wobei die Bremswirkung in Öffnungs- und Verschlussrichtung variabel sein kann.

Um ein vorgefertigtes Modul lediglich auf den Tankstutzen aufsetzen zu können, sind die Verschlusselemente und vorzugsweise auch die Federelemente und/oder die Bremseinrichtungen an einem Träger montiert, der seinerseits an dem Tankstutzen befestigbar ist. Sofern der Träger von oben auf die Tankstutzenöffnung aufgesetzt wird, weist der Träger ebenfalls eine Öffnung auf, durch die die Zapfpistole hindurchtritt und die von den Verschlußelementen verschlossen wird.

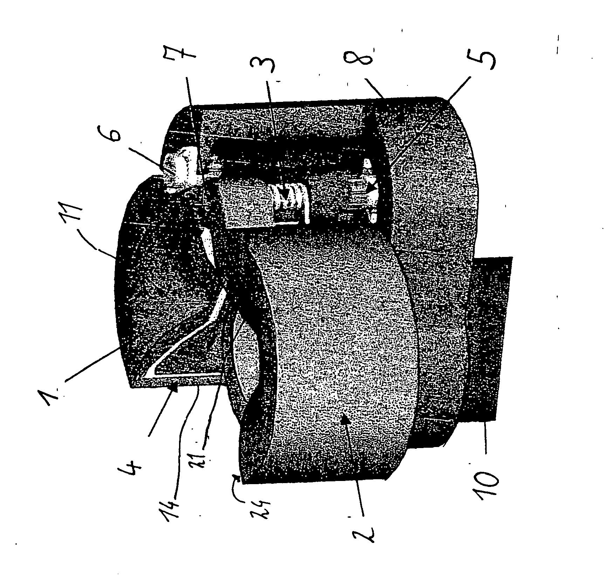

Nachfolgend wird ein Ausführungsbeispiel der Erfindung anhand der einzigen Figur näher erläutert, in der eine Verschlußeinrichtung in perspektivischer Ansicht mit Teilschnitten dargestellt ist.

Die Verschlußeinrichtung gemäß dem dargestellten Ausführungsbeispiel weist zwei Verschlußelemente 1, 2 auf, die schwenkbar um eine Achse parallel zur Längserstreckung eines Tankstutzens 10 gelagert sind. Die Schwenkachse entspricht im wesentlichen der Mittelachse einer Schraube 7, an der die Verschlußelemente 1, 2 gelagert sind. Um die Schraube 7 ist eine Drehfeder 3 angeordnet, die die Verschlußelemente 1, 2 in Richtung aufeinander belasten, so dass im Normalzustand die Verschlußelemente 1, 2 aneinander anliegen und den Tankstutzen 10 verschließen. An den Kontaktbereichen 14, 24 der Verschlußelemente 1, 2 sind jeweils Dichtungen 4 angeordnet, die im verschlossenen Zustand einen gasdichten Verschluß auch an der Stoßstelle der Verschlußelemente 1, 2 untereinander gewährleisten. Ebenfalls ist es vorgesehen, dass eine Überdeckung, beispielsweise durch korrespondierende Lippen und Ausnehmungen, zwischen den Verschlußelementen 1, 2 vorliegt, um die Dichtungswirkung zu verstärken.

An der Oberseite der Verschlußelemente 1, 2 sind Einführschrägen 11, 21 ausgebildet, die im vorliegenden Fall trichterförmig in Gestalt eines Hyperboloids ausgebildet sind. Alternativ können die Einführschrägen 11, 21 auch geradwandig als Pyramide, Dach oder in Keilform ausgebildet sein, ebenfalls ist eine konische Ausbildung der Einführschrägen 11, 21 möglich.

Dadurch, dass sich die Einführschrägen 11, 21 in Richtung auf den Tankstutzen 10 verjüngen, wird bei Aufsetzen einer Zapfpistole und Ausübung eines gewissen Druckes in Richtung auf den Tankstutzen 10 eine Querkraftkomponente erzeugt, die die Verschlußelemente 1, 2 entgegen der Federkraft, die durch die Feder 3 aufgebracht wird, auseinander drückt. Die Verschlußelemente 1, 2 verschwenken dann um die Schraube 7 und geben die Öffnung des Tankstutzens 10 frei. Die Zapfpistole kann in den Tankstutzen hineingleiten und der Tankvorgang kann durchgeführt werden. Nach Beendigung des Tankvorganges wird die Zapfpistole herausgezogen und durch die Federkraft der Feder 3 schließen sich die Verschlußelemente 1, 2 zangenartig um den Tankstutzen 10 und dichten diesen ab.

Um eine gedämpfte Bewegung sowohl beim Öffnen als auch beim Verschließen hinsichtlich der Verschlußelemente 1, 2 zu bewirken, sind diesen jeweils Bremseinrichtungen 5, 6 zugeordnet, die in dem vorliegenden Ausführungsbeispiel als Silikonbremsen dargestellt sind. Dabei wird über eine Verzahnung ein Drehmoment von den Verschlußelementen 1, 2 auf die Bremseinrichtungen 5, 6 übertragen, die jeweils die Bewegung in Öffnungsrichtung oder Verschlußrichtung verzögert bzw. dämpft.

Die Verschlußelemente 1, 2, die Feder 3 sowie die Bremseinrichtungen 5, 6 sind vorliegend an einem Träger 8 angeordnet und bilden mit diesem zusammen ein vormontiertes Modul, das im Rahmen der Endmontage lediglich auf den Einfüllstutzen 10 aufgesetzt und an diesem befestigt werden muss. Auf diese Art und Weise ist es möglich, die Verschlußeinrichtung komplett vorzumontieren und ein solches an die Endmontagestelle zu liefern.

Alternativ zu der dargestellten Ausführungsform ist es möglich, dass die Verschlußelemente 1, 2 einzeln gelagert sind und sich wie ein Greifer oder Kugel-oberflächensegmente mit entsprechenden Einführschrägen auseinander- und zusammenfächern, um den Tankstutzen 10 freizugeben oder diesen zu verschließen.

Ebenfalls ist es möglich, mehr als zwei Verschlußelemente vorzusehen, wodurch der benötigte Bauraum aufgrund der geringeren Auskragung der Verschlußelemente reduziert wird.

## Patentansprüche

1. Verschlusseinrichtung für Tankstutzen (10) in Kraftfahrzeugen, mit zumindest zwei an dem Tankstutzen (10) lagerbaren Verschlusselementen (1, 2), wobei die Verschlusselemente (1, 2) an ihrer Oberseite Einführschrägen (11, 21) aufweisen, die dergestalt ausgebildet sind, dass bei Aufsetzen einer Tankpistole die Verschlusselemente (1, 2) den Tankstutzen (10) freigeben, **dadurch gekennzeichnet, dass** die Verschlusselemente (1, 2) um eine Schwenkachse schwenkbar gelagert sind, die im Wesentlichen parallel zu der Längserstreckung des Tankstutzens (10) ausgerichtet ist, so dass bei Aufsetzen der Tankpistole die Verschlusselemente (1, 2) verschwenken.

2. Verschlusseinrichtung nach Anspruch 1, **dadurch gekennzeichnet, dass** die Einführschrägen (11, 21) konisch, dach- oder pyramidenförmig oder als Hyperboloid ausgebildet sind.

3. Verschlusseinrichtung nach Anspruch 1 oder 2, **dadurch gekennzeichnet, dass** die Verschlusselemente (1, 2) entgegen einer Öffnungsbewegung federbelastet sind.

4. Verschlusseinrichtung nach einem der voranstehenden Ansprüche, **dadurch gekennzeichnet, dass** die Verschlusselemente (1, 2) im geschlossenen Zustand einander überdeckende Lippen aufweisen.

5. Verschlusseinrichtung nach einem der voranstehenden Ansprüche, **dadurch gekennzeichnet, dass** die Verschlusselemente (1, 2) und der Tankstutzen (10) korrespondierend ausgebildete Vorsprünge und Ausnehmungen aufweisen, die im geschlossenen Zustand einander überdecken.

6. Verschlusseinrichtung nach einem der voranstehenden Ansprüche, **dadurch gekennzeichnet, dass** Dichtungen (4) an den Kontaktbereichen (14, 24) zwischen den Verschlusselementen (1, 2) und/oder an den Kontaktbereichen zwischen den Verschlusselementen (1, 2) und dem Tankstutzen (10) angeordnet sind.

7. Verschlusseinrichtung nach einem der voranstehenden Ansprüche, **dadurch gekennzeichnet, dass** den Verschlusselementen (1, 2) Bremseinrichtungen (5, 6) zur verzögerten Bewegung beim Öffnen und Verschließen des Tankstutzens (10) zugeordnet sind.

8. Verschlusseinrichtung nach Anspruch 7, **dadurch gekennzeichnet, dass** die Bremseinrichtungen (5, 6) als Silikonbremsen ausgebildet sind.

9. Verschlusseinrichtung nach einem der voranstehenden Ansprüche, **dadurch gekennzeichnet, dass** die Verschlusselemente (1, 2), Federelemente (3) und/oder Bremseinrichtungen (5, 6) an einem Träger (8) montiert sind, der an dem Tankstutzen (10) befestigbar ist.

## Claims

1. A closure device for a tank inlet (10) in motor vehicles, comprising at least two closure elements (1, 2), which can be supported at the tank inlet (10), wherein said closure elements (1, 2) comprise insertion bevels (11, 21) at their upper side, which are configured so that the closure elements (1, 2) clear the tank inlet (10), when the fuel nozzle is inserted, wherein the closure elements (1, 2) are supported pivotable about a pivot axis, which is aligned substantially in parallel with the longitudinal extension of the tank inlet (10), so that the closure elements (1, 2) pivot when the fuel nozzle is inserted.

2. A closure device according to claim 1, wherein the insertion bevels (11, 21) are configured conical, roof- or pyramid shaped, or shaped as a hyperboloid.

3. A closure device according to claim 1 or 2, wherein the closure elements (1, 2) are spring loaded against the opening movement.

4. A closure device according to one of the preceding claims, wherein the closure elements (1, 2) comprise lips overlapping one another in closed state.

5. A closure device according to one of the preceding claims, wherein the closure elements (1, 2) and the tank inlet (10) comprise corresponding protrusions and recesses, which overlap one another in closed state.

6. A closure device according to one of the preceding claims, wherein seals (4) are disposed at the contact portions (14, 24) between the closure elements (1, 2) and/or the contact portions between the closure elements (1, 2) and the tank inlet (10).

7. A closure device according to one of the preceding claims, wherein braking means (5, 6) are associated with the closure elements (1, 2) for delayed movement during opening and closing of the tank inlet (10).

8. A closure device according to claim 7, wherein the braking means (5, 6) are configured as silicone brakes.

9. A closure device according to one of the preceding claims, wherein the closure elements (1, 2), the spring elements (3), and/or the braking means (5, 6) are mounted on a carrier (8), which can be mounted to the tank inlet (10).

## Revendications

1. Dispositif d'obturation pour embout de remplissage d'essence (10) d'automobiles, comportant au moins deux éléments de fermeture (1, 2) pouvant être montés sur l'embout de remplissage d'essence (10), sachant que les éléments de fermeture (1, 2) possèdent sur leur face supérieure des biais d'insertion (11, 21) formés de telle sorte que, lors de l'introduction d'un pistolet de pompe à carburant, les éléments de fermeture (1, 2) libèrent l'accès à l'embout de remplissage d'essence (10), **caractérisé en ce que** les éléments de fermeture (1, 2) peuvent être montés de manière orientable autour d'un axe de pivotement et orientés sensiblement parallèles à l'extension longitudinale de l'embout de remplissage d'essence (10), de sorte que, lors de l'introduction du pistolet de pompe à carburant, les éléments de fermeture (1, 2) pivotent.

2. Dispositif d'obturation selon la revendication 1, **caractérisé en ce que** les biais d'insertion (11, 21) sont de forme conique, en forme de toit ou pyramidale ou de forme hyperboloïde,

3. Dispositif d'obturation selon la revendication 1 ou 2, **caractérisé en ce que** les éléments de fermeture (1, 2) sont sollicités par ressort à l'encontre d'un mouvement d'ouverture.

4. Dispositif d'obturation selon l'une des revendications précédentes, **caractérisé en ce que** les éléments de fermeture (1, 2) comportent des lèvres se recouvrant mutuellement en position fermée.

5. Dispositif d'obturation selon l'une des revendications précédentes, **caractérisé en ce que** les éléments de fermeture (1, 2) et l'embout de remplissage d'essence (10) présentent des épaulements et des évidements correspondants qui se chevauchent les uns aux autres en position fermée.

6. Dispositif d'obturation selon l'une des revendications précédentes, **caractérisé en ce que** des joints (4) sont disposés dans les zones de contact (14, 24) entre les éléments de fermeture (1, 2) et / ou dans les zones de contact entre les éléments de fermeture (1, 2) et l'embout de remplissage d'essence (10).

7. Dispositif d'obturation selon l'une des revendications précédentes, **caractérisé en ce que** des dispositifs de freinage (5, 6) sont attribués aux éléments de fermeture (1, 2) afin de ralentir le mouvement lors de l'ouverture et de la fermeture de l'embout de remplissage d'essence (10).

8. Dispositif d'obturation selon la revendication 7, **caractérisé en ce que** les dispositifs de freinage (5, 6) sont conçus comme des freins au silicone.

9. Dispositif d'obturation selon l'une des revendications précédentes, **caractérisé en ce que** les éléments de fermeture (1, 2), l'élément formant ressort (3) et / ou les dispositifs de freinage (5, 6) sont montés sur un support (8) pouvant être fixé à l'embout de remplissage d'essence (10).
